# EUROPEAN PATENT APPLICATION

(11) **EP 4 657 256 A1**
(43) Date of publication of application: **03.12.2025**
(21) Application number: 24756159.0
(22) Date of filing: 06.02.2024
(51) Int. Cl.: G06F 9/50

(54) **MULTI-CLUSTER SYSTEM AND ELASTIC SCALING METHOD THEREFOR, COMPUTING DEVICE CLUSTER, AND MEDIUM**

(30) Priority: 14.02.2023 CN 202310114694
(71) Applicant: Huawei Cloud Computing Technologies Co., Ltd., Guiyang, Guizhou 550025 (CN)
(72) Inventor: JIANG, Wei, Guiyang, Guizhou 550025 (CN); WANG, Zefeng, Guiyang, Guizhou 550025 (CN); REN, Hongcai, Guiyang, Guizhou 550025 (CN); XIE, Shiyi, Guiyang, Guizhou 550025 (CN)
(74) Representative: Isarpatent
(86) International application number: PCT/CN2024/076320
(87) International publication number: WO 2024/169786

(57) **Abstract**

This application provides a multi-cluster system, an autoscaling method therefor, a computing device cluster, a medium, and a computer program product. The multi-cluster system includes: a plurality of clusters in which an application is deployed, where a plurality of instances of the application are distributed in the plurality of clusters, each cluster includes a native scaling module, and the native scaling module is configured to increase or decrease a quantity of instances in the cluster to implement single-cluster instance autoscaling; and a management apparatus, configured to manage the plurality of clusters. The management apparatus includes: a status detection module, configured to detect statuses of the plurality of clusters; a scaling configuration management module, configured to manage native scaling configurations of the plurality of clusters; and a scaling execution module, configured to: when the status detection module detects that single-cluster instance autoscaling cannot be implemented, perform cross-cluster instance autoscaling. According to this application, single-cluster autoscaling and cross-cluster autoscaling can be implemented, migration costs can be reduced, large-scale reconstruction of an existing system can be avoided, and compatibility can be implemented.

## Description

This application claims priority to Chinese Patent Application No. 202310114694.0, filed with the China National Intellectual Property Administration on February 14, 2023, and entitled "MULTI-CLUSTER SYSTEM, AUTOSCALING METHOD THEREFOR, COMPUTING DEVICE CLUSTER, AND MEDIUM", which is incorporated herein by reference in its entirety.

### TECHNICAL FIELD

The present invention relates to the field of cloud computing technologies, and in particular, to a multi-cluster system, an autoscaling method for the multi-cluster system, a computing device cluster, a computer-readable storage medium, and a computer program product including instructions.

### BACKGROUND

Nowadays, multi-cloud and multi-cluster deployment has gradually become the norm. However, how to implement proper resource allocation among a plurality of server clusters becomes a concern of people. In the conventional technology, there is an autoscaling technology for a single server cluster, but such a technology cannot implement cross-cluster instance autoscaling. Currently, there is a lack of technology that can implement efficient and accurate autoscaling by performing proper scaling to use resources in a multi-cluster case.

### SUMMARY

In view of this, this application is dedicated to providing a multi-cluster system, an autoscaling method for the multi-cluster system, a computing device cluster, a computer-readable storage medium, and a computer program product including instructions, to implement single-cluster autoscaling and cross-cluster autoscaling, reduce migration costs, avoid large-scale reconstruction of an existing system, and implement compatibility with a native autoscaling system.

According to one aspect, this application provides a multi-cluster system. The multi-cluster system includes: a plurality of clusters in which an application is deployed, where a plurality of instances of the application are distributed in the plurality of clusters, each of the plurality of clusters includes a native scaling module, and the native scaling module is configured to increase or decrease a quantity of instances in the cluster to implement single-cluster instance autoscaling; and a management apparatus, configured to manage the plurality of clusters. The management apparatus includes: a status detection module, configured to detect statuses of the plurality of clusters; a scaling configuration management module, configured to manage native scaling configurations of the plurality of clusters; and a scaling execution module, configured to: when the status detection module detects that single-cluster instance autoscaling cannot be implemented, perform cross-cluster instance autoscaling.

According to this aspect, scaling is performed by collaborating a single-cluster autoscaling policy with a cross-cluster autoscaling policy, to implement cross-cluster autoscaling. In this way, an inherent management system and software of a single cluster can be fully used, and a function can be added based on the management system and software, to minimize migration costs. In addition, efficient two-layer autoscaling is implemented.

According to a special embodiment of this application, the scaling configuration management module splits a multi-cluster scaling configuration into a plurality of single-cluster scaling configurations based on the multi-cluster scaling configuration configured by a user, and allocates the plurality of single-cluster scaling configurations to the plurality of clusters. The native scaling module performs single-cluster instance autoscaling based on the allocated single-cluster scaling configuration.

According to this embodiment, an overall autoscaling configuration is divided into individual autoscaling configurations, to implement hierarchical management of autoscaling and implement hierarchical scaling of system resources. This helps fully use resources and properly allocate computing power.

According to a special embodiment of this application, the multi-cluster scaling configuration includes a maximum quantity of multi-cluster instances and a minimum quantity of multi-cluster instances, and the single-cluster scaling configuration includes a maximum quantity of single-cluster instances and a minimum quantity of single-cluster instances. After the multi-cluster scaling configuration is split into the plurality of single-cluster scaling configurations, a sum of maximum quantities of single-cluster instances of the plurality of clusters is equal to the maximum quantity of multi-cluster instances, and a sum of minimum quantities of single-cluster instances of the plurality of clusters is greater than or equal to the minimum quantity of multi-cluster instances. The native scaling module of the cluster performs single-cluster instance autoscaling between the maximum quantity of single-cluster instances and the minimum quantity of single-cluster instances of the cluster.

According to this embodiment, the maximum quantity of instances and the minimum quantity of instances are set in a multi-cluster perspective, so that the maximum quantity of single-cluster instances and the minimum quantity of single-cluster instances can be effectively controlled. This implements simple and easy control and reduces migration costs of the management system.

According to a special embodiment of this application, the scaling configuration management module adjusts a single-cluster scaling configuration of the cluster based on workloads that are of the plurality of clusters and that are detected by the status detection module.

According to this embodiment, the single-cluster instance autoscaling configuration is adjusted, so that allocation statuses of the autoscaling configurations between the clusters can be fully considered, and the autoscaling configuration can be properly arranged as much as possible, to avoid distribution imbalance.

According to a special embodiment of this application, the single-cluster scaling configuration includes a maximum quantity of single-cluster instances and a minimum quantity of single-cluster instances. The status detection module detects the maximum quantity of single-cluster instances, a current quantity of instances, and a resource status of the cluster. The scaling configuration management module periodically calculates a difference between the maximum quantity of single-cluster instances and the current quantity of instances to obtain differences, and sums up the differences of the plurality of clusters to obtain a sum. The scaling configuration management module reallocates the sum to the plurality of clusters, so that each cluster has a new maximum quantity of single-cluster instances.

According to this embodiment, values of autoscaling are optimized, so that a maximum quantity of instances of autoscaling is reallocated, workloads can be properly balanced, and resources can be flexibly scheduled.

According to a special embodiment of this application, when the status detection module detects that a resource of a first cluster in the plurality of clusters is inadequate and a resource of a second cluster in the plurality of clusters is adequate, the scaling execution module increases a quantity of instances in the second cluster.

According to this embodiment, resource allocation and corresponding scale-out operations are implemented between different clusters, so that resource shortage of a specific cluster can be resolved, and workloads of the clusters can be balanced.

According to a special embodiment of this application, when the status detection module detects that resource usage of a third cluster in the plurality of clusters is less than a preset value and resource usage of a fourth cluster that is in the plurality of clusters and whose priority is lower than that of the third cluster is less than the preset value, the scaling execution module maintains a quantity of instances in the third cluster, and a native scaling module of the fourth cluster decreases a quantity of instances in the fourth cluster.

According to this embodiment, a quantity of instances in a low-priority cluster can be preferentially decreased. In addition, a cluster with low resource usage is scaled in, so that a waste of computing resources of the cluster can be avoided, and a service can be properly arranged.

According to another aspect, this application provides an autoscaling method for a multi-cluster system, including: A native scaling module of each of a plurality of clusters increases or decreases a quantity of instances that are of an application deployed in the plurality of clusters and that are distributed in the cluster, to implement single-cluster instance autoscaling; a scaling configuration management module of a management apparatus manages native scaling configurations of the plurality of clusters; and a status detection module of the management apparatus detects statuses of the plurality of clusters; and when the status detection module detects that single-cluster instance autoscaling cannot be implemented, a scaling execution module of the management apparatus performs cross-cluster instance autoscaling.

According to a special embodiment of this application, that the scaling configuration management module of the management apparatus manages the native scaling configurations of the plurality of clusters includes: The scaling configuration management module splits a multi-cluster scaling configuration into a plurality of single-cluster scaling configurations based on the multi-cluster scaling configuration configured by a user, and allocates the plurality of single-cluster scaling configurations to the native scaling modules of the plurality of clusters; and the native scaling module performs single-cluster instance autoscaling based on the allocated single-cluster scaling configuration.

According to a special embodiment of this application, the multi-cluster scaling configuration includes a maximum quantity of multi-cluster instances and a minimum quantity of multi-cluster instances, and the single-cluster scaling configuration includes a maximum quantity of single-cluster instances and a minimum quantity of single-cluster instances. That the scaling configuration management module splits the multi-cluster scaling configuration into the plurality of single-cluster scaling configurations based on the multi-cluster scaling configuration configured by the user, and allocates the plurality of single-cluster scaling configurations to the native scaling modules of the plurality of clusters includes: splitting the multi-cluster scaling configuration into the plurality of single-cluster scaling configurations, so that a sum of maximum quantities of single-cluster instances of the plurality of clusters is equal to the maximum quantity of multi-cluster instances, and a sum of minimum quantities of single-cluster instances of the plurality of clusters is greater than or equal to the minimum quantity of multi-cluster instances. That the native scaling module performs single-cluster instance autoscaling based on the allocated single-cluster scaling configuration includes: The native scaling module of the cluster performs single-cluster instance autoscaling between the maximum quantity of single-cluster instances and the minimum quantity of single-cluster instances of the cluster.

According to a special embodiment of this application, that the scaling configuration management module of the management apparatus manages the native scaling configurations of the plurality of clusters includes: The scaling configuration management module adjusts a single-cluster scaling configuration of the cluster based on workloads that are of the plurality of clusters and that are detected by the status detection module.

According to a special embodiment of this application, the single-cluster scaling configuration includes a maximum quantity of single-cluster instances and a minimum quantity of single-cluster instances. That the scaling configuration management module adjusts the single-cluster scaling configuration of the cluster based on the workloads that are of the plurality of clusters and that are detected by the status detection module includes: The status detection module detects the maximum quantity of single-cluster instances, a current quantity of instances, and a resource status of the cluster; the scaling configuration management module periodically calculates a difference between the maximum quantity of single-cluster instances and the current quantity of instances to obtain differences, and sums up the differences of the plurality of clusters to obtain a sum; and the scaling configuration management module reallocates the sum to the plurality of clusters, so that each cluster has a new maximum quantity of single-cluster instances.

According to a special embodiment of this application, that the status detection module of the management apparatus detects the statuses of the plurality of clusters; and when the status detection module detects that single-cluster instance autoscaling cannot be implemented, the scaling execution module of the management apparatus performs cross-cluster instance autoscaling includes: When the status detection module detects that a resource of a first cluster in the plurality of clusters is inadequate and a resource of a second cluster in the plurality of clusters is adequate, the scaling execution module increases a quantity of instances in the second cluster.

According to a special embodiment of this application, that the status detection module of the management apparatus detects the statuses of the plurality of clusters; and when the status detection module detects that single-cluster instance autoscaling cannot be implemented, the scaling execution module of the management apparatus performs cross-cluster instance autoscaling includes: When the status detection module detects that resource usage of a third cluster in the plurality of clusters is less than a preset value and resource usage of a fourth cluster that is in the plurality of clusters and whose priority is lower than that of the third cluster is less than the preset value, the scaling execution module maintains a quantity of instances in the third cluster, and a native scaling module of the fourth cluster decreases a quantity of instances in the fourth cluster.

According to another aspect, this application provides a computing device. The computing device includes a processor and a memory. The processor is configured to execute a computer program stored in the memory, to implement the foregoing autoscaling method for the multi-cluster system.

According to another aspect, this application provides a computing device cluster. The computing device cluster includes at least one computing device, and each computing device includes a processor and a memory. The processor of the at least one computing device is configured to execute instructions stored in the memory of the at least one computing device, to enable the computing device cluster to perform the foregoing autoscaling method for the multi-cluster system.

According to another aspect, this application provides a computer-readable storage medium. The computer-readable storage medium stores a computer program, and the computer program is used to perform the foregoing autoscaling method for the multi-cluster system.

According to another aspect, this application provides a computer program product including instructions. When the instructions are run by a computing device cluster, the computing device cluster is enabled to perform the foregoing autoscaling method for the multi-cluster system.

The computing device, the computing device cluster, the computer-readable storage medium, or the computer program product provided above are all configured to perform the autoscaling method for the multi-cluster system provided above. The autoscaling method for the multi-cluster system corresponds to a specific feature of the multi-cluster system. For beneficial effect that can be achieved by the autoscaling method, refer to the beneficial effect of the corresponding solution in the multi-cluster system provided above. Details are not described herein again.

### BRIEF DESCRIPTION OF DRAWINGS

The following describes specific implementations of this application in detail with reference to accompanying drawings.
FIG. 1 is a schematic flowchart of a single-cluster autoscaling technology in this field;
FIG. 2 is a schematic flowchart of a cross-cluster autoscaling technology in this field;
FIG. 3 is a diagram of a structure of a multi-cluster system according to an embodiment of this application;
FIG. 4 is a schematic flowchart of scaling configuration distribution according to the embodiment in FIG. 3;
FIG. 5 is a schematic flowchart of an optimization method according to the embodiment in FIG. 3;
FIG. 6 is a schematic flowchart of a scale-out method according to the embodiment in FIG. 3;
FIG. 7 is a schematic flowchart of a scale-in method according to the embodiment in FIG. 3;
FIG. 8 is a schematic flowchart of another scale-in method according to the embodiment in FIG. 3;
FIG. 9 is a schematic flowchart of an autoscaling method for a multi-cluster system according to an embodiment of this application;
FIG. 10 is a diagram of a structure of a computing device according to an embodiment of this application; and
FIG. 11 is a diagram of a computing device cluster according to an embodiment of this application.

### DESCRIPTION OF EMBODIMENTS

To make a person skilled in the art understand a concept and an idea of this application more clearly, the following describes this application in detail with reference to specific embodiments. It should be understood that the embodiments provided in this specification are merely a part of all possible embodiments of this application. After reading the specification of this application, a person skilled in the art is capable of making improvements, modifications, or replacements to some or all of the following embodiments, and the improvements, modifications, or replacements also fall within the protection scope of this application.

In this specification, the terms "a", "one", and other similar terms are not intended to indicate that only one of the things exists, but indicate that the related description is merely for one of the things, and there may be one or more of the things. In this specification, the terms "contain", "include", and other similar terms are intended to indicate a logical relationship, but cannot be considered as a relationship in a spatial structure. For example, "A includes B" means that B logically belongs to A, but does not mean that B is located inside A in space. In addition, meanings of the terms "contain", "include", and other similar terms should be considered open rather than closed. For example, "A includes B" means that B belongs to A, but B does not necessarily constitute all of A. A may further include other elements such as C, D, and E.

In this specification, the terms "first", "second", and other similar terms are not intended to imply any sequence, quantity, or importance, but are merely used to distinguish between different elements. In this specification, the terms "embodiment", "this embodiment", "an embodiment", and "one embodiment" do not indicate that related descriptions are applicable to only one particular embodiment, but indicate that the descriptions are further applicable to one or more other embodiments. A person skilled in the art should understand that, in this specification, any description made for an embodiment may be replaced, combined, or combined in another manner with related descriptions in one or more other embodiments, and a new embodiment generated through replacement, combination, or combination in the another manner can be readily figured out by a person skilled in the art, and falls within the protection scope of this application.

In embodiments of this application, a cluster may be a server cluster, to be specific, a plurality of servers are centralized to perform a same service. For a client, it seems that there is only one server. The server cluster may perform parallel computing through a plurality of computers to obtain a high computing speed, or may perform backup through a plurality of computers, so that an entire system can still run properly if any machine is faulty. The server herein may be a conventional server, or may be a cloud server.

In embodiments of this application, a multi-cluster system may be a cluster federation, and the cluster federation may include one federated cluster and one or more sub-clusters. The federated cluster may be a member of the sub-cluster, or may exist independently of the sub-cluster. The federated cluster may be a cluster in which a federation management system is deployed, and the federated cluster manages the plurality of sub-clusters in a unified manner. In embodiments of this application, a cluster or a single cluster is a single cluster that constitutes the multi-cluster system, and may be a federated cluster, or may be a sub-cluster.

In embodiments of this application, an instance may be a resource occupied by an application deployed in the server cluster, and may be an abstract concept (for example, a copy), or may be a physical entity (for example, a server). In a container orchestration engine (Kubernetes, K8s) cluster, an instance is represented as a container group (pod). The application may be an application program or a microservice, and an underlying layer corresponds to one or more instances.

In embodiments of this application, autoscaling may be a service used to automatically adjust a computing capability (for example, a quantity of instances) based on a service requirement and according to a policy. For example, autoscaling is used to automatically increase or decrease the quantity of instances based on resource usage (for example, a central processing unit and/or a memory). For example, autoscaling may be used to automatically increase or decrease the quantity of instances based on a computing power requirement. When a server access volume suddenly increases and computing power is inadequate, a quantity of cloud instances is increased until the access volume decreases, and the quantity of cloud instances is decreased after the computing power is adequate.

Multi-cloud and multi-cluster deployment has become the new norm of cloud native. Increasing enterprises use cluster federations to manage a plurality of sub-clusters. Each cluster is deployed with a K8s system. A plurality of instances of one application are deployed in different K8s clusters according to different policies to provide services at the same time. A deployment solution may be applied to a plurality of types of deployment scenarios such as intra-city multi-active deployment, heterogeneous resource deployment, and multi-region deployment.

In the plurality of sub-clusters managed by the federated cluster, a central processing unit/memory workload varies depending on a traffic volume. K8s single-cluster scaling technologies mainly include horizontal autoscaling (horizontal pod autoscaler, HPA) and vertical autoscaling (vertical pod autoscaler, VPA). The HPA scales in or out a quantity of instances based on central processing unit/memory usage. The VPA scales up or down an instance specification based on central processing unit/memory usage. However, in a multi-cluster scenario, in the single-cluster scaling technology, resources of the plurality of sub-clusters cannot be coordinated and managed in a unified manner. A federation side does not meet the following requirements: (1) Workloads on the federation side are minimized. (2) A plurality of cross-cluster scaling policies are supported. (3) After federated cluster management is faulty, the sub-cluster has an autonomy capability (to be specific, the sub-cluster scales in or out a quantity of application instances based on an HPA and an application workload in the cluster). (4) A cross-cloud and cross-cluster scaling coordination technology is implemented on the premise that the cross-cloud and cross-cluster scaling coordination technology is compatible with a K8s native HPA (to be specific, when a scaling request is received, an optimal sub-cluster is selected based on a resource and according to a policy to scale in or out a quantity of application instances). Therefore, a cross-cloud and cross-cluster application autoscaling method that can resolve the foregoing problem needs to be provided.

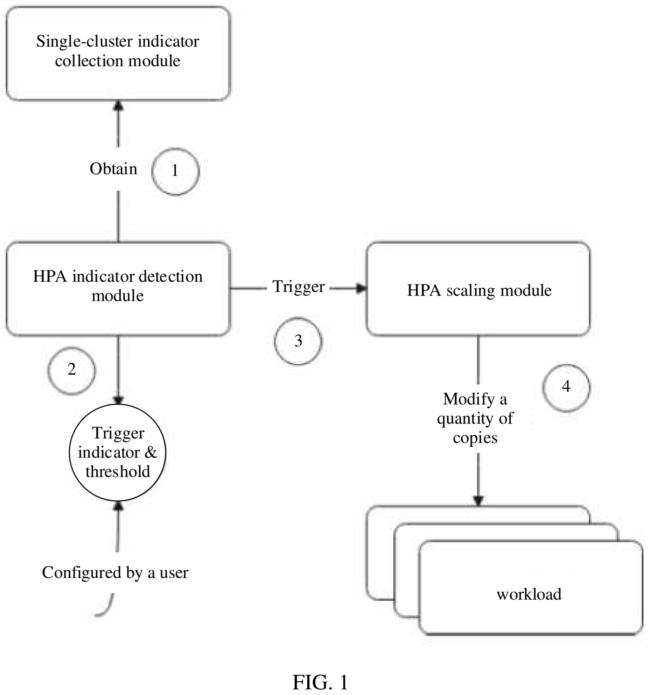

A typical single-cluster HPA autoscaling technology in this field is shown in FIG. 1, and includes the following four steps.
(1) A single-cluster configuration collection module is responsible for collecting central processing unit/memory pressure of all workloads in a single cluster.
(2) An HPA configuration check module periodically invokes the single-cluster configuration collection module to obtain a corresponding configuration and a current workload value, and compares the corresponding configuration and the current workload value with a trigger configuration and a threshold that are configured by a user.
(3) If the corresponding configuration exceeds the trigger configuration, an HPA scaling module is triggered to trigger scale-out; or if the corresponding configuration is less than the trigger configuration, the HPA scaling module is triggered to trigger scale-in.
(4) The HPA scaling module receives trigger of the HPA configuration detection module, and modifies a quantity of copies based on a configuration value to scale in or out a corresponding workload. An algorithm for modifying the quantity of copies is as follows: Expected quantity of copies=rounding up [quantity of current copies*(current configuration/expected configuration)]. For example, expected central processing unit usage is 50%, current central processing unit usage is 90%, and the current quantity of copies is 11. In this case, rounding up is performed to obtain [11*(90%/50%)]=20.

Disadvantages of the single-cluster HPA autoscaling technology in this field include: (1) Cross-cloud and cross-cluster autoscaling cannot be supported. (2) Cross-cloud and cross-cluster unified scaling cannot be supported. As a result, a multi-cluster scenario cannot be supported.

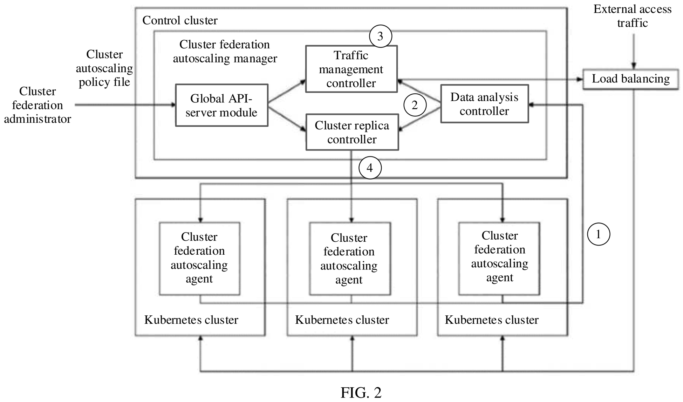

A typical cross-cluster autoscaling technology in this field is shown in FIG. 2, and includes the following four steps.
(1) A federated control cluster deploys a cluster federation autoscaling agent in a sub-cluster. The agent periodically collects a transactions per second (transactions per second, TPS) workload configuration of the current cluster and reports the configuration to a data analysis controller of the control cluster.
(2) The data analysis controller analyzes the received configuration, processes configuration data, and sends a processing analysis result to a cluster replica controller and a traffic management controller.
(3) The traffic management controller receives the data, obtains a user configuration from an application programming interface server (application programming interface server, API-Server) module, and sets, based on a configuration file and the configuration data, a traffic routing weight responsible for balancing.
(4) The cluster replica controller receives the data, obtains the user configuration from the API-server module, and delivers a scaling instruction to the cluster federation autoscaling agent based on the configuration file and the configuration data (TPS configuration). The cluster federation autoscaling agent modifies, according to the instruction, a quantity of workload instances corresponding to the cluster.

In the technology shown in FIG. 2, during scale-out, a cluster with a higher priority is preferentially scaled out, and during scale-in, a cluster with a lower priority is preferentially scaled in. A scale-out calculation method is as follows: Expected quantity of instances to be scaled out=current quantity of instances*(current TPS/maximum TPS)-current quantity of instances. Expected quantity of instances to be scaled in=current quantity of instances-current quantity of instances*(current TPS/minimum TPS). The maximum TPS and minimum TPS are used to define scaling configurations. The cluster replica controller implements, in a unified manner, cross-cluster scaling on the instances to be scaled in or out (based on priorities).

Disadvantages of the cross-cluster autoscaling technology in this field include the following four points. (1) After the control cluster is faulty, the sub-cluster cannot be scaled in or out, resulting in poor overall function reliability. (2) A hierarchical scaling management capability is not supported. The control cluster monitors a configuration change in real time and fully takes over, in real time, instances to be scaled in or out, resulting in heavy pressure on a central side. (3) The cross-cluster autoscaling technology is incompatible with a K8s native single-cluster HPA, cannot be enabled together with a single-cluster HPA function, and is mainly based on the TPS configuration, instead of a central processing unit/memory of a single-cluster HPA, resulting in high user learning costs. (4) Only a priority-based cross-cluster scaling policy is supported, and a plurality of cross-cluster scaling policies cannot be supported.

Based on federated management cluster management, some embodiments of this application provide a cross-cloud and cross-cluster autoscaling method that meets the following five characteristics. (1) The hierarchical scaling management capability is supported. When a sub-cluster can be scaled in or out, the sub-cluster is preferentially autonomous. When a sub-cluster cannot be scaled in or out, the federated control cluster takes over the sub-cluster and scales in or out in another cluster to implement cross-cluster scaling. Pressure on the federated cluster is minimized. (2) When the federated control cluster is faulty, sub-cluster scaling management autonomy is supported. A sub-cluster can further scale in or out an instance based on an HPA configuration previously delivered by the federated control cluster. However, the sub-cluster lacks a cross-cluster capability. Performance behavior of the sub-cluster is the same as that of a K8s single-cluster HPA. (3) A scaling management API is compatible with a K8s native HPA API. A user can migrate the K8s native HPA API to the scaling management API of the present invention at very low costs. (4) Configuration of a customized cross-cluster scaling policy is supported, for example, priority-based scaling. (5) A workload capability of the sub-cluster varies. To achieve optimal autonomy of the sub-cluster, a maximum quantity of sub-cluster HPA instances and a minimum quantity of sub-cluster HPA instances can be overall optimized.

In some embodiments of this application, a federated cluster horizontal autoscaling application programming interface (FederatedHPA API, that is, an API defined in some embodiments of this application) compatible with the K8s native HPA and a hierarchical cross-cluster scaling coordination system are provided, to prefer sub-cluster scaling autonomy when a sub-cluster can be scaled in or out; or perform cross-cluster scaling on a federation side according to a policy when a sub-cluster cannot be scaled in or out, to meet hierarchical autoscaling, perform sub-cluster autonomy, minimize pressure on the federation side, and perform multi-policy customization. In addition, the sub-cluster HPA is optimized to maximize use of an autonomy capability of the sub-cluster.

Some embodiments of this application are based on a scenario in which a service workload is balanced based on an instance workload. For example, if there are five instances in a cluster A and there are 10 instances in a cluster B, a service workload of the cluster B is twice that of the cluster A. Therefore, based on this premise, all sub-clusters are scaled in during scale-in and all sub-clusters are scaled out during scale-out.

In some embodiments of this application, hierarchical scaling and cross-cluster scaling and sub-cluster autonomy can be implemented, and cross-cluster scaling coordination can be performed when the sub-cluster cannot scale. Without loss of consistency, these modules may be deployed on a central control plane in a centralized manner, or may be deployed in a sub-cluster.

Usage scenarios in some embodiments of this application include but are not limited to the following three scenarios. (1) A local internet data center (internet data center, IDC) cluster and a public cloud cluster are deployed in a hybrid scaling manner. During scale-out, the local IDC cluster is preferentially used, and the public cloud cluster is used after the local IDC cluster is used up, to minimize service consumption. (2) Heterogeneous resources are deployed in a hybrid scaling manner, for example, X86 and ARM are deployed in the hybrid scaling manner. During scale-out, X86 is preferentially used to ensure service stability. (3) A plurality of regions are deployed in a hybrid scaling manner, for example, a plurality of regions and a plurality of clusters in the east and west of China are deployed. During scale-out, cluster resources in the west of China are preferentially used to alleviate shortage of energy in the east of China.

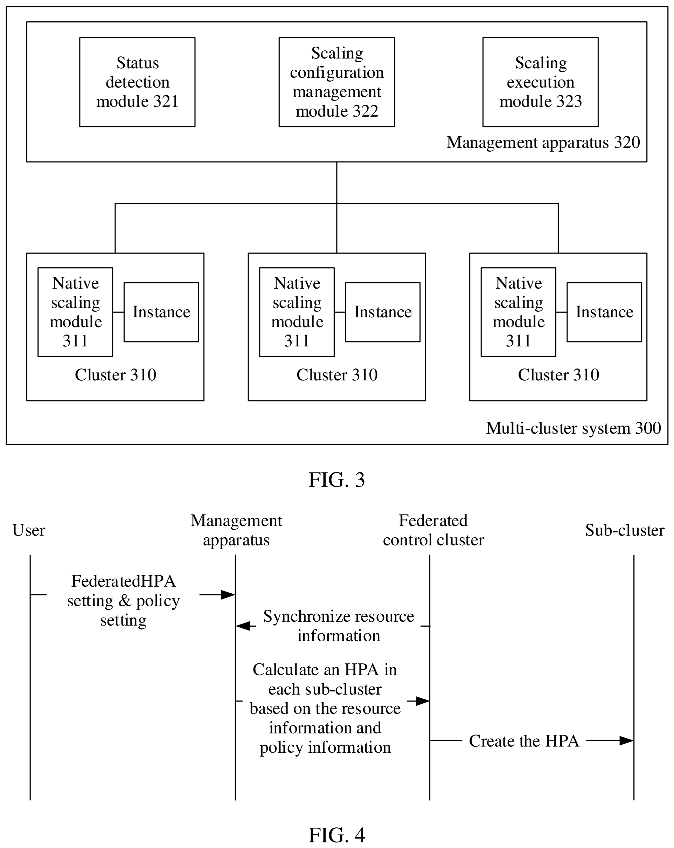

FIG. 3 is a diagram of a structure of a multi-cluster system according to an embodiment of this application.

According to this embodiment, the multi-cluster system 300 includes a plurality of clusters 310 and a management apparatus 320.

An application is deployed in the plurality of clusters 310, and a plurality of instances of the application are distributed in the plurality of clusters 310. Each of the plurality of clusters 310 includes a native scaling module 311, and the native scaling module 311 is configured to increase or decrease a quantity of instances in the cluster 310 to implement single-cluster instance autoscaling.

The native scaling module 311 of the cluster 310 may be an HPA module, configured to implement an HPA function, or may be a VPA module, or another native technology or system that can implement single-cluster autoscaling.

The management apparatus 320 is configured to manage the plurality of clusters 310. The management apparatus includes a status detection module 321, a scaling configuration management module 322, and a scaling execution module 323.

When the multi-cluster system is a cluster federation, the management apparatus 320 may be represented as an apparatus installed in a federated cluster, or may be represented as an apparatus installed in a sub-cluster. In particular, the management apparatus 320 may be used as a part of a federated cluster management system.

The status detection module 321 is configured to detect statuses of the plurality of clusters 310.

The status detection module 321 may detect a workload of the cluster, resource usage of the cluster, a maximum quantity of instances and a minimum quantity of instances of the cluster, and may detect another status of the cluster.

The scaling configuration management module 322 is configured to manage native scaling configurations of the plurality of clusters 310.

Managing the native scaling configuration may include modifying a configuration based on which the native scaling module 311 performs autoscaling, or managing, in another manner, a configuration based on which the native scaling module 311 performs autoscaling.

The scaling execution module 323 is configured to: when the status detection module 321 detects that single-cluster instance autoscaling cannot be implemented, perform cross-cluster instance autoscaling.

The management apparatus 320 according to this application may be implemented via an API. For example, a function is added on an API of a native HPA in a K8s cluster, to obtain a FederatedHPA API according to this application. The following fields are added based on the API according to this application:
FederatedMaxReplicas, used to limit a maximum quantity of multi-cluster instances;
FederatedMinReplicas, used to limit a minimum quantity of multi-cluster instances;
clusterAutoscalingPreferences, indicating a customized policy, where this is merely an example herein, any policy may be customized, key attributes include a priority of a cluster, maximum scaling usage of the cluster, a maximum of instances in the cluster, and a minimum quantity of instances in the cluster; and
autoscaleMultiClusterDelay, indicating a cross-cluster scaling delay, where cross-cluster autoscaling is not performed immediately, and this delay may be set when a quantity of nodes or a specification can be scaled in or out in a cluster.

According to this embodiment, the multi-cluster system 300 can implement distribution of an autoscaling configuration.

In an example, the scaling configuration management module splits a multi-cluster scaling configuration into a plurality of single-cluster scaling configurations based on the multi-cluster scaling configuration configured by a user, and allocates the plurality of single-cluster scaling configurations to the native scaling modules of the plurality of clusters. The native scaling module performs single-cluster instance autoscaling based on the allocated single-cluster scaling configuration.

In an example, the multi-cluster scaling configuration includes a maximum quantity of multi-cluster instances and a minimum quantity of multi-cluster instances, and the single-cluster scaling configuration includes a maximum quantity of single-cluster instances and a minimum quantity of single-cluster instances. After the multi-cluster scaling configuration is split into the plurality of single-cluster scaling configurations, a sum of maximum quantities of single-cluster instances of the plurality of clusters is equal to the maximum quantity of multi-cluster instances, and a sum of minimum quantities of single-cluster instances of the plurality of clusters is equal to the minimum quantity of multi-cluster instances. The native scaling module of the cluster performs single-cluster instance autoscaling between the maximum quantity of single-cluster instances and the minimum quantity of single-cluster instances of the cluster.

The following uses one cluster federation as an example to describe in detail a distribution process of an autoscaling configuration of the multi-cluster system 300 according to this application.

Specifically, federated cluster horizontal autoscaling (FederatedHPA) delivered by a user may be split into HPAs in sub-clusters according to a policy (including but not limited to a priority, a weight, and customization) and other input information, and the HPAs are deployed in the sub-clusters.

Specifically, the FederatedHPA is split into an HPA in each sub-cluster and the HPA is delivered. For example, FederatedMaxReplicas is 100, and FederatedMinReplicas is 10. Two clusters are selected according to a policy, and a distribution policy is a current available resource ratio (available central processing unit (central processing unit, CPU) resource of a cluster 1:available CPU resource of a cluster 2=1:4). In this case, a minimum quantity of instances/a maximum quantity of instances for an HPA in the cluster 1 is 2/20, and a minimum quantity of instances/a maximum quantity of instances for an HPA in the cluster 2 is 8/80.

Refer to FIG. 4. An execution procedure of distributing the FederatedHPA is shown in the figure. When the user creates the FederatedHPA, the HPAs corresponding to the sub-clusters are calculated according to a user configuration policy and based on sub-cluster resource information to ensure that a sum of maximum quantities of instances for the HPAs in all the sub-clusters is equal to FederatedMaxReplicas. In addition, based on calculation performed according to a policy, when a minimum quantity of instances for the HPA in each cluster is less than 1, the minimum quantity of instances is set to 1. Finally, the corresponding HPA is created in each corresponding sub-cluster.

During distribution, the following two different operations are performed according to the previous example policy.
(1) If a maximum quantity of instances and a minimum quantity of instances in a sub-cluster that are directly defined exist, a corresponding HPA is created in the sub-cluster.
(2) If there is a primary/secondary relationship like a priority relationship, a delivered workload of a low-priority cluster is set to 0 and a delivered workload of a highest-priority cluster is set to an initial quantity of instances (if a cluster has an HPA but a quantity of instances is 0, scaling cannot be performed. In this case, a resource of a high-priority cluster may be preferentially used).

According to this embodiment, the multi-cluster system 300 can implement optimization of an autoscaling configuration.

In an example, the scaling configuration management module adjusts a single-cluster scaling configuration of the cluster based on workloads that are of the plurality of clusters and that are detected by the status detection module.

In an example, the single-cluster scaling configuration includes a maximum quantity of single-cluster instances and a minimum quantity of single-cluster instances. The status detection module detects the maximum quantity of single-cluster instances, a current quantity of instances, and a resource status of the cluster (for example, whether the cluster is overloaded). The scaling configuration management module periodically calculates a difference between the maximum quantity of single-cluster instances and the current quantity of instances to obtain differences, and sums up the differences of the plurality of clusters to obtain a sum. The scaling configuration management module reallocates the sum to the plurality of clusters, so that each cluster has a new maximum quantity of single-cluster instances.

The following uses one cluster federation as an example to describe in detail an optimization process of an autoscaling configuration of the multi-cluster system 300 according to this application.

Specifically, an optimization algorithm of an HPA in a sub-cluster may include the following content.
(1) A maximum quantity of single-cluster instances and a current quantity of instances for the HPA in the sub-cluster are periodically obtained, a sum of deltas (maximum quantities of single-cluster instances for HPAs-current quantities of instances) of all the clusters is calculated, and the maximum quantities of single-cluster instances for the HPAs in all the clusters are modified to the current quantities of instances. Then, the sum of the deltas is reallocated to a target cluster according to a policy configured by the user, and a maximum quantity of single-cluster instances for an HPA is created or modified in the corresponding cluster (if the maximum quantity of single-cluster instances for the HPA is created in the corresponding cluster, a minimum quantity of single-cluster instances is 1).
(2) If a current quantity of instances in a sub-cluster is 0 and a maximum quantity of single-cluster instances for an HPA is not 0, a value of a maximum quantity of single-cluster instances is reallocated to another cluster during optimization. In this case, an HPA resource of the current sub-cluster is deleted.
(3) When a resource of a cluster reaches configured maximum usage and a maximum quantity of single-cluster instances is not reached, a difference is reallocated to the target cluster, similar to that in step 1.

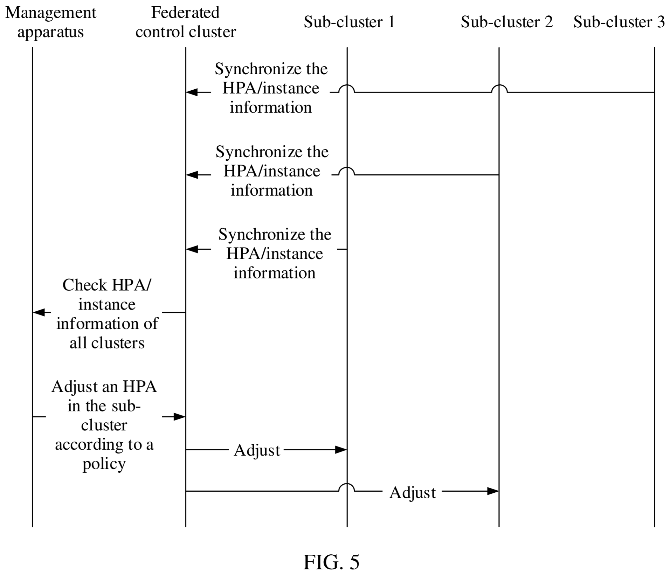

Refer to FIG. 5. A status detection module deployed in a federated cluster collects HPA/instance quantity information from each sub-cluster, and a dynamic optimization module calculates an HPA in a new sub-cluster according to the foregoing algorithm and a user configuration policy (including a dynamic resource weight, maximum cluster usage, and the like). Finally, the HPA in the sub-cluster is modified and adjusted.

According to this embodiment, the multi-cluster system 300 can implement cross-cluster scale-out.

In an example, when the status detection module detects that a resource of a first cluster in the plurality of clusters is inadequate and a resource of a second cluster in the plurality of clusters is adequate, the scaling execution module increases a quantity of instances in the second cluster.

That a resource is inadequate may mean that a resource of a CPU or a resource of a memory is inadequate to provide an expected quantity of instances.

Specifically, a scaling trigger may be received, a cluster is selected according to a policy, and a quantity of instances in the corresponding cluster is adjusted. For example, there are two clusters: a cluster 1 and a cluster 2. Two more instances need to be added to the cluster 1 due to an inadequate resource. Selection is performed according to a policy, and it is found that the cluster 2 has an idle resource and meets a selection policy. Therefore, two instances are added to the cluster 2.

Specifically, a cross-cluster scale-out decision algorithm may be in the following form.

After an HPA is delivered, current resource usage may be obtained from an HPA status of a sub-cluster (as shown in the following example). If a current expected quantity of instances is the same as a maximum quantity of single-cluster instances and the usage is greater than average usage set by the HPA, cross-cluster scale-out is triggered, and a quantity of instances to be scaled out=current quantity of instances*(current usage-target usage)/target usage. Then, based on the calculated quantity of instances to be scaled out, an optimal and available cluster is selected according to a user configuration policy, and the corresponding quantity of instances are added to a target cluster.

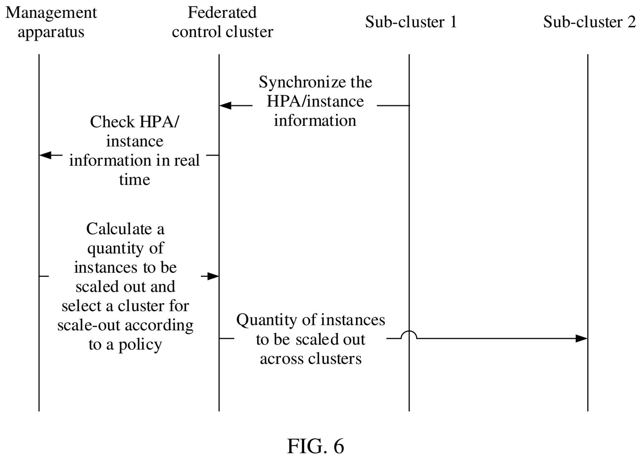

Refer to FIG. 6. When a quantity of instances is equal to a maximum quantity of single-cluster instances for an HPA and average usage of an HPA status is greater than target average usage, a policy scaling module is triggered to perform cross-cluster scale-out, and a target cluster selects an optimal cluster for scale-out according to a user configuration policy.

It should be particularly noted that if there is a primary/secondary relationship like a priority relationship, when a maximum quantity of single-cluster instances is reached, a quantity of instances in a secondary-priority cluster is modified to a quantity of instances to be scaled out (in this case, the quantity of instances in the secondary-priority cluster needs to be 0), and an HPA scaling module of a sub-cluster scales out.

Specifically, when a quantity of instances in a sub-cluster does not reach a maximum quantity of single-cluster instances for a delivered HPA, the sub-cluster first scales out an instance through a native K8s scaling module. When the instance cannot be scaled out (specifically, the maximum quantity of single-cluster instances is not reached, and an inadequate resource causes a scaling failure), the policy scaling module selects an optimal and available cluster based on a quantity of instances that cannot be scaled and according to a user configuration policy, and scales out the corresponding quantity of instances in the target cluster.

In this case, the quantity of instances in the sub-cluster cannot be scheduled due to the inadequate resource. If there is the primary/secondary relationship like the priority relationship and the resource is inadequate, the quantity of instances in the secondary-priority cluster is modified to the quantity of instances to be scaled out (in this case, the quantity of instances in the secondary-priority cluster needs to be 0), and the HPA scaling module of the sub-cluster scales out.

According to this embodiment, the multi-cluster system 300 can implement cross-cluster scale-in.

In an example, when the status detection module detects that resource usage of a third cluster in the plurality of clusters is less than a preset value and resource usage of a fourth cluster that is in the plurality of clusters and whose priority is lower than that of the third cluster is less than the preset value, the scaling execution module maintains a quantity of instances in the third cluster, and a native scaling module decreases a quantity of instances in the fourth cluster.

The resource usage may mean that a CPU or memory resource in a cluster is lower than an expected value in a case of a current quantity of instances.

Specifically, a cross-cluster scale-in decision algorithm may include the following content.
(1) If a primary/secondary relationship like a priority relationship exists in a policy configuration, a quantity of instances in a high-priority cluster is maintained during scale-in (specifically, a quantity of instances is calculated in real time based on HPA usage; and when the quantity of instances is less than the current quantity of instances, scale-in is performed). After a quantity of instances in a low-priority cluster is decreased to the minimum quantity of single-cluster instances by the native K8s scaling module, the same method is used to scale in a secondary-priority cluster.
(2) If a primary/secondary relationship like a primary-backup relationship or a priority relationship exists in a policy configuration, a quantity of instances in each sub-cluster is controlled by a native K8s scaling module of the sub-cluster during scale-in.
(3) When current quantities of instances in all the sub-clusters are equal to the minimum quantity of single-cluster instances, if a sum of the current quantities of instances in all the sub-clusters is greater than the minimum quantity of multi-cluster instances, quantities of instances in a part of clusters are modified to 0 according to a policy and scale-in is gradually performed, until the sum of the current quantities of instances in all the sub-clusters is equal to the minimum quantity of multi-cluster instances.

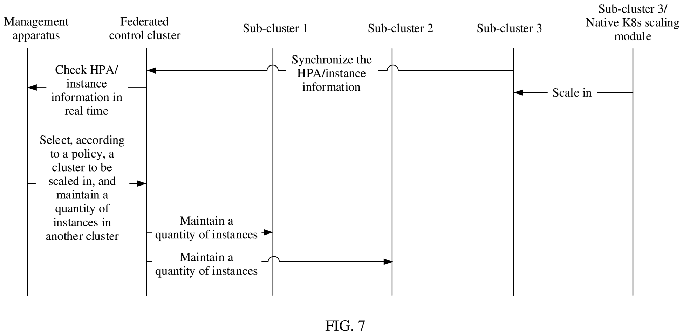

Refer to FIG. 7. When a scale-in request of a sub-cluster is received, a cluster to be scaled in is selected according to a policy. After the target cluster to be scaled in is selected, a native K8s scaling module of the target cluster is responsible for scale-in, and the policy scaling module maintains a quantity of instances in another cluster. After a quantity of instances in the target cluster to be scaled in is the same as a minimum quantity of single-cluster instances for an HPA, the preceding steps are repeated. If there is no primary/secondary relationship, the native K8s scaling module is responsible for scale-in of the sub-cluster. In this solution, a system does not participate in scale-in.

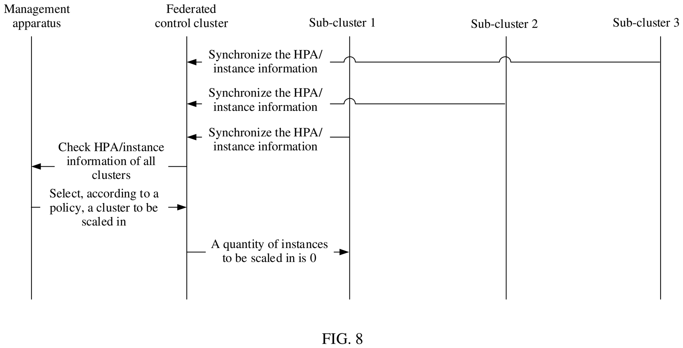

Refer to FIG. 8. HPA/instance quantity information is collected from each sub-cluster. When quantities of instances in all sub-clusters are equal to a minimum quantity of single-cluster instances for an HPA, and a sum of minimum quantities of single-cluster instances for all HPAs is greater than the minimum quantity of multi-cluster instances, a cluster whose instances are decreased to 0 is selected according to a policy, until the sum of the minimum quantities of single-cluster instances for the HPAs is equal to the minimum quantity of multi-cluster instances.

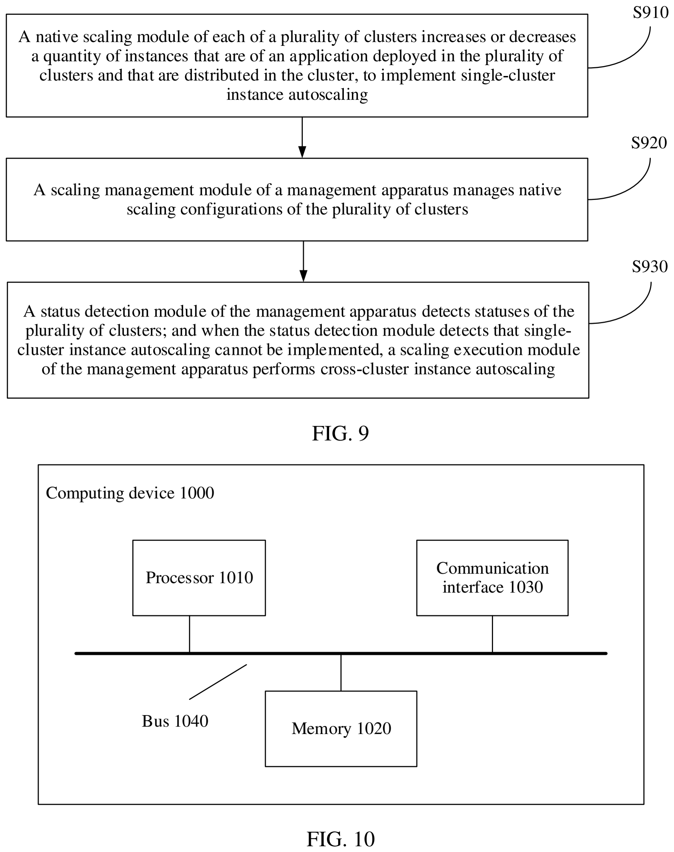

Based on the system embodiment in FIG. 3, an embodiment of this application further provides an autoscaling method for a multi-cluster system. A schematic flowchart of the method is shown in FIG. 9. The method is applicable to the multi-cluster system shown in FIG. 3.

According to this embodiment, the autoscaling method for the multi-cluster system includes steps S910 to S930. The following describes the steps.

S910: A native scaling module of each of a plurality of clusters increases or decreases a quantity of instances that are of an application deployed in the plurality of clusters and that are distributed in the cluster, to implement single-cluster instance autoscaling.

S920: A scaling configuration management module of a management apparatus manages native scaling configurations of the plurality of clusters.

S930: A status detection module of the management apparatus detects statuses of the plurality of clusters; and when the status detection module detects that single-cluster instance autoscaling cannot be implemented, a scaling execution module of the management apparatus performs cross-cluster instance autoscaling.

It should be noted that the autoscaling method for the multi-cluster system provided in the foregoing embodiment and the multi-cluster system embodiment shown in FIG. 3 belong to a same concept. For a specific implementation process of the autoscaling method, refer to the multi-cluster system embodiment. Details are not described herein again.

FIG. 10 is a diagram of a hardware structure of a computing device 1000 according to an embodiment of this application.

Refer to FIG. 10. The computing device 1000 includes a processor 1010, a memory 1020, a communication interface 1030, and a bus 1040. The processor 1010, the memory 1020, and the communication interface 1030 are connected to each other through the bus 1040. The processor 1010, the memory 1020, and the communication interface 1030 may alternatively be connected to each other in another connection manner other than the bus 1040.

The memory 1020 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a hard disk.

The processor 1010 may be a general-purpose processor, and the general-purpose processor may be a processor that performs a specific step and/or operation by reading and executing content stored in a memory (for example, the memory 1020). For example, the general-purpose processor may be a central processing unit (central processing unit, CPU). The processor 1010 may include at least one circuit, to perform all or some of the steps of the autoscaling method for the multi-cluster system provided in the embodiment shown in FIG. 9.

The communication interface 1030 includes interfaces configured to implement interconnection of the components inside the computing device 1000, for example, an input/output (input/output, I/O) interface, a physical interface, and a logical interface, and an interface configured to implement interconnection between the computing device 1000 and another device (for example, another computing device or user equipment). The physical interface may be an Ethernet interface, an optical fiber interface, an ATM interface, or the like. The communication interface 1030 may be externally connected to an input apparatus and an output apparatus. For example, the input apparatus may be a microphone or a microphone array, configured to capture a voice input signal; or may be a communication network connector, configured to receive a captured input signal from a cloud or another device; and may further include, for example, a keyboard or a mouse. The output apparatus may output various information to the outside, including determined distance information, direction information, and the like. The output apparatus may include, for example, a display, a speaker, a printer, a communication network, and a remote output device connected to the communication network.

The bus 1040 may be any type of communication bus, for example, a system bus, configured to implement interconnection among the processor 1010, the memory 1020, and the communication interface 1030.

The foregoing components may be separately disposed on chips that are independent of each other, or at least some or all of the components may be disposed on a same chip. Whether the components are separately disposed on different chips or integrated and disposed on one or more chips usually depends on a requirement of a product design. A specific implementation form of the foregoing component is not limited in embodiments of this application.

The computing device 1000 shown in FIG. 10 is merely an example. In an implementation process, the computing device 1000 may further include other components, which are not enumerated in this specification.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

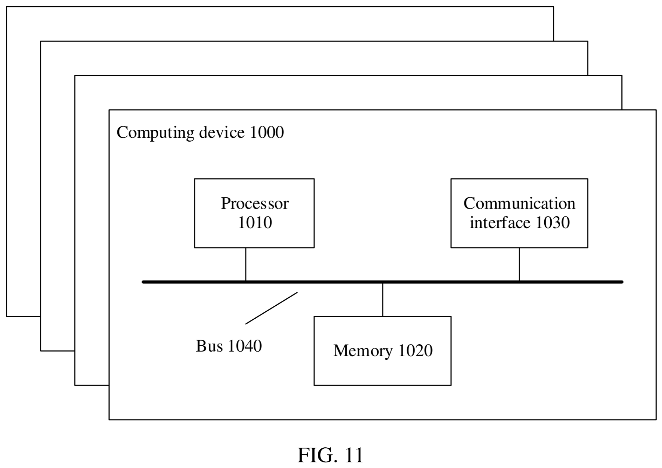

As shown in FIG. 11, the computing device cluster includes at least one computing device 1000. Memories 1020 in the one or more computing devices 1000 in the computing device cluster may store same instructions used to perform the autoscaling method for the multi-cluster system. The one or more computing devices in the computing device cluster may be connected via a network, and may be specifically connected to the network through a communication interface in each computing device. The network may be a wide area network, a local area network, or the like.

In some possible implementations, alternatively, the memories 1020 in the one or more computing devices 1000 in the computing device cluster may separately store some instructions used to perform the autoscaling method for the multi-cluster system. In other words, a combination of the one or more computing devices 1000 may jointly execute instructions used to perform the autoscaling method for the multi-cluster system.

It should be noted that memories 1020 in different computing devices 1000 in the computing device cluster may store different instructions that are respectively used to perform some functions of the management apparatus of the multi-cluster system. In other words, the instructions stored in the memories 1020 in the different computing devices 1000 can implement functions of one or more modules in the management apparatus of the multi-cluster system.

An embodiment of this application may further provide a computer-readable storage medium. The computer-readable storage medium stores computer program instructions. When the computer program instructions are run by a processor, the processor is enabled to perform the steps of the autoscaling method for the multi-cluster system in embodiments of this application that are described above in this specification.

The computer-readable storage medium may be any combination of one or more readable media. The readable medium may be a readable signal medium or a readable storage medium. The readable storage medium may include, for example, but is not limited to, an electrical, a magnetic, an optical, an electromagnetic, an infrared, or a semiconductor system, apparatus, or device, or any combination thereof. More specific examples (non-exhaustive) of the readable storage medium include: an electrical connection having one or more conductors, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The foregoing describes in detail concepts, principles, and ideas of this application with reference to specific implementations (including embodiments and examples). A person skilled in the art should understand that implementations of this application are more than the foregoing several forms. After reading this application document, a person skilled in the art may make any possible improvement, replacement, or equivalent form to the steps, methods, apparatuses, and components in the foregoing implementations, these improvements, replacements, and equivalent forms shall be considered to fall within the scope of this application. The protection scope of this application is subject to the claims.

## Claims

1. A multi-cluster system, comprising:
a plurality of clusters, wherein an application is deployed in the plurality of clusters, a plurality of instances of the application are distributed in the plurality of clusters, each of the plurality of clusters comprises a native scaling module, and the native scaling module is configured to increase or decrease a quantity of instances in the cluster to implement single-cluster instance autoscaling; and
a management apparatus, configured to manage the plurality of clusters, wherein the management apparatus comprises:
a status detection module, configured to detect statuses of the plurality of clusters;
a scaling configuration management module, configured to manage native scaling configurations of the plurality of clusters; and
a scaling execution module, configured to: when the status detection module detects that single-cluster instance autoscaling cannot be implemented, perform cross-cluster instance autoscaling.

2. The multi-cluster system according to claim 1, wherein the scaling configuration management module splits a multi-cluster scaling configuration into a plurality of single-cluster scaling configurations based on the multi-cluster scaling configuration configured by a user, and allocates the plurality of single-cluster scaling configurations to the plurality of clusters; and the native scaling module performs single-cluster instance autoscaling based on the allocated single-cluster scaling configuration.

3. The multi-cluster system according to claim 2, wherein the multi-cluster scaling configuration comprises a maximum quantity of multi-cluster instances and a minimum quantity of multi-cluster instances, and the single-cluster scaling configuration comprises a maximum quantity of single-cluster instances and a minimum quantity of single-cluster instances; after the multi-cluster scaling configuration is split into the plurality of single-cluster scaling configurations, a sum of maximum quantities of single-cluster instances of the plurality of clusters is equal to the maximum quantity of multi-cluster instances, and a sum of minimum quantities of single-cluster instances of the plurality of clusters is greater than or equal to the minimum quantity of multi-cluster instances; and the native scaling module of the cluster performs single-cluster instance autoscaling between the maximum quantity of single-cluster instances and the minimum quantity of single-cluster instances of the cluster.

4. The multi-cluster system according to claim 1, wherein the scaling configuration management module adjusts a single-cluster scaling configuration of the cluster based on workloads that are of the plurality of clusters and that are detected by the status detection module.

5. The multi-cluster system according to claim 4, wherein the single-cluster scaling configuration comprises a maximum quantity of single-cluster instances and a minimum quantity of single-cluster instances; the status detection module detects the maximum quantity of single-cluster instances, a current quantity of instances, and a resource status of the cluster; the scaling configuration management module periodically calculates a difference between the maximum quantity of single-cluster instances and the current quantity of instances to obtain differences, and sums up the differences of the plurality of clusters to obtain a sum; and the scaling configuration management module reallocates the sum to the plurality of clusters, so that each cluster has a new maximum quantity of single-cluster instances.

6. The multi-cluster system according to claim 1, wherein when the status detection module detects that a resource of a first cluster in the plurality of clusters is inadequate and a resource of a second cluster in the plurality of clusters is adequate, the scaling execution module increases a quantity of instances in the second cluster.

7. The multi-cluster system according to claim 1, wherein when the status detection module detects that resource usage of a third cluster in the plurality of clusters is less than a preset value and resource usage of a fourth cluster that is in the plurality of clusters and whose priority is lower than that of the third cluster is less than the preset value, the scaling execution module maintains a quantity of instances in the third cluster, and a native scaling module of the fourth cluster decreases a quantity of instances in the fourth cluster.

8. An autoscaling method for a multi-cluster system, comprising:
increasing or decreasing, by a native scaling module of each of a plurality of clusters, a quantity of instances that are of an application deployed in the plurality of clusters and that are distributed in the cluster, to implement single-cluster instance autoscaling;
managing, by a scaling configuration management module of a management apparatus, native scaling configurations of the plurality of clusters; and
detecting, by a status detection module of the management apparatus, statuses of the plurality of clusters; and when the status detection module detects that single-cluster instance autoscaling cannot be implemented, performing, by a scaling execution module of the management apparatus, cross-cluster instance autoscaling.

9. The autoscaling method according to claim 8, wherein managing, by the scaling configuration management module of the management apparatus, the native scaling configurations of the plurality of clusters comprises:
splitting, by the scaling configuration management module, a multi-cluster scaling configuration into a plurality of single-cluster scaling configurations based on the multi-cluster scaling configuration configured by a user, and allocating the plurality of single-cluster scaling configurations to the plurality of clusters; and
performing, by the native scaling module, single-cluster instance autoscaling based on the allocated single-cluster scaling configuration.

10. The autoscaling method according to claim 9, wherein the multi-cluster scaling configuration comprises a maximum quantity of multi-cluster instances and a minimum quantity of multi-cluster instances, and the single-cluster scaling configuration comprises a maximum quantity of single-cluster instances and a minimum quantity of single-cluster instances; and splitting, by the scaling configuration management module, the multi-cluster scaling configuration into the plurality of single-cluster scaling configurations based on the multi-cluster scaling configuration configured by the user, and allocating the plurality of single-cluster scaling configurations to the native scaling modules of the plurality of clusters comprises:
splitting the multi-cluster scaling configuration into the plurality of single-cluster scaling configurations, so that a sum of maximum quantities of single-cluster instances of the plurality of clusters is equal to the maximum quantity of multi-cluster instances, and a sum of minimum quantities of single-cluster instances of the plurality of clusters is greater than or equal to the minimum quantity of multi-cluster instances; and
performing, by the native scaling module, single-cluster autoscaling based on the allocated single-cluster scaling configuration comprises:
performing, by the native scaling module of the cluster, single-cluster instance autoscaling between the maximum quantity of single-cluster instances and the minimum quantity of single-cluster instances of the cluster.

11. The autoscaling method according to claim 8, wherein managing, by the scaling configuration management module of the management apparatus, the native scaling configurations of the plurality of clusters comprises:
adjusting, by the scaling configuration management module, a single-cluster scaling configuration of the cluster based on workloads that are of the plurality of clusters and that are detected by the status detection module.

12. The autoscaling method according to claim 11, wherein the single-cluster scaling configuration comprises a maximum quantity of single-cluster instances and a minimum quantity of single-cluster instances, and adjusting, by the scaling configuration management module, the single-cluster scaling configuration of the cluster based on the workloads that are of the plurality of clusters and that are detected by the status detection module comprises:
detecting, by the status detection module, the maximum quantity of single-cluster instances, a current quantity of instances, and a resource status of the cluster;
periodically calculating, by the scaling configuration management module, a difference between the maximum quantity of single-cluster instances and the current quantity of instances to obtain differences, and summing up the differences of the plurality of clusters to obtain a sum; and
reallocating, by the scaling configuration management module, the sum to the plurality of clusters, so that each cluster has a new maximum quantity of single-cluster instances.

13. The autoscaling method according to claim 8, wherein detecting, by the status detection module of the management apparatus, the statuses of the plurality of clusters; and when the status detection module detects that single-cluster instance autoscaling cannot be implemented, performing, by the scaling execution module of the management apparatus, cross-cluster instance autoscaling comprises:
when the status detection module detects that a resource of a first cluster in the plurality of clusters is inadequate and a resource of a second cluster in the plurality of clusters is adequate, increasing, by the scaling execution module, a quantity of instances in the second cluster.

14. The autoscaling method according to claim 8, wherein detecting, by the status detection module of the management apparatus, the statuses of the plurality of clusters; and when the status detection module detects that single-cluster instance autoscaling cannot be implemented, performing, by the scaling execution module of the management apparatus, cross-cluster instance autoscaling comprises:
when the status detection module detects that resource usage of a third cluster in the plurality of clusters is less than a preset value and resource usage of a fourth cluster that is in the plurality of clusters and whose priority is lower than that of the third cluster is less than the preset value, maintaining, by the scaling execution module, a quantity of instances in the third cluster, and decreasing, by a native scaling module of the fourth cluster, a quantity of instances in the fourth cluster.

15. A computing device cluster, comprising at least one computing device, wherein each computing device comprises a processor and a memory; and
the processor of the at least one computing device is configured to execute instructions stored in the memory of the at least one computing device, to enable the computing device cluster to perform the autoscaling method for the multi-cluster system according to any one of claims 8 to 14.

16. A computer-readable storage medium, wherein the computer-readable storage medium stores a computer program, and the computer program is used to perform the autoscaling method for the multi-cluster system according to any one of claims 8 to 14.

17. A computer program product comprising instructions, wherein when the instructions are run by a computing device cluster, the computing device cluster is enabled to perform the autoscaling method for the multi-cluster system according to any one of claims 8 to 14.
